# EUROPÄISCHE PATENTSCHRIFT

(11) **EP 0 719 106 B1**
(45) Veröffentlichungstag und Bekanntmachung des Hinweises auf die Patenterteilung: **30.07.1997**
(21) Anmeldenummer: 94928323.8
(22) Anmeldetag: 07.09.1994
(51) Int. Cl.: A47J 19/00, B07B 1/46, B07B 1/06

(54) **SIEB**
SIEVE
TAMIS

(30) Priorität: 15.09.1993 DE 9313931 U
(43) Veröffentlichungstag der Anmeldung: 03.07.1996
(73) Patentinhaber: Salzmann, Manfred, D-58511 Lüdenscheid (DE)
(72) Erfinder: Salzmann, Manfred, D-58511 Lüdenscheid (DE)
(74) Vertreter: Hassler, Werner, Dr.
(86) Internationale Anmeldenummer: EP9402995
(87) Internationale Veröffentlichungsnummer: WO9507647

(56) Entgegenhaltungen:
- EP-A- 0 088 028
- AT-A- 44 803
- DE-A- 3 907 777
- DE-U- 1 897 241
- DE-U- 9 115 840
- GB-A- 2 059 807

## Beschreibung

### Technisches Gebiet der Erfindung

Die Erfindung betrifft ein Sieb, umfassend ein feines, mit einem Drahtring (7) fest verbundenes Drahtgeflecht (3) und zwei durch Spannelemente (6) lösbar miteinander verbundene, das Drahtgeflecht und den Drahtring festspannende Ringmäntel (1, 2).

Anwendungsgebiet der Erfindung sind Passiersiebe für Küchenzwecke.

### Stand der Technik

Ein Sieb der gattungsgemäßen Art ist in dem DE-U-91 15 840 beschrieben. Das Drahtgeflecht muß nach jedem Gebrauch zu Reinigungszwecken abgenommen werden. Dieses ist in Küchenbetrieb aus lebensmittelhygienischen Gründen zwingend. Bei diesem Sieb kann das Drahtgeflecht beim Überziehen über den Stirnrand und beim Festklemmen in dem Spalt leicht beschädigt und dadurch vorzeitig unbrauchbar werden.

Die DE-A1-39 07 777 beschreibt ferner ein Sieb, wobei der erste Ringmantel in einen Stirnflansch endet und der zweite Ringmantel mit einer radialen Ringstute den Stirnflansch übergreift. Das als Blechscheibe azsgebildete Siebteil ist randseitig zwischen dem Stirnmantel und der Ringstufe eingeklemmt. Diese Befestigung ist für ein Siebteii aus einen Drahtgeflecht ungeeignet.

### Zusammenfassung der Erfindung

Aufgabe der Erfindung ist eine solche Ausbildung des Siebes, daß das Drahtgeflecht schonend eingebaut und ausgebaut werden kann, so daß Beschädigungen desselben ausscheiden.

Diese Aufgabe wird nach der Erfindung dadurch gelöst, daß das Drahtgeflecht (7) eben und der Drahtring (8) auf eine Fläche des Drahtgeflechts (7) aufgesetzt ist, daß der erste Ringmantel (1) in einen gerundeten Stirnflansch (3) endet, daß der Drahtring (8) die Außenkante des Stirnflansches (3) übergreift und daß der zweite Ringmantel (2) mit einem in axialer Richtung ausgerichteten Steg (5) einer radialen Ringstufe (4) den Stirnflansch (3) und den Drahtring (8) übergreift.

Die Erfindung unterscheidet sich insofern vom Stand der Technik, als das Drahtgeflecht eben ist und zwischen den Stirnflansch und die Ringstufe eingelegt wird. Gleitende Bewegungen gegenüber der Fläche des Drahtgeflechts kommen beim Zusammensetzen der Ringmäntel nicht vor. Der Drahtring zentriert das Drahtgeflecht einwandfrei. Der Einbau und Ausbau des Siebes für die notwendige Reinigung nach jedem Gebrauch verkürzt nicht die Gebrauchsdauer des Drahtgeflechts.

Damit auch Kanten des Stirnflansches das Drahtgeflecht nicht beschädigen können, sieht die Erfindung vor, daß der Stirnflansch einen viertelkreisförmigen Querschnitt hat.

Eine bündige und schonende Halterung des Drahtgeflechts wird dadurch sichergestellt, daß die Ringstufe rechtwinklig von dem zweiten Ringmantel abgesetzt ist und dem Strinflansch stumpf gegenübersteht.

Eine dauerhafte stoffschlüssige Verbindung wird dadurch erreicht, daß der Drahtring durch eine Schweißverbindung mit dem Drahtgeflecht verbunden ist.

Eine besonders einfache Handhabung ergibt sich dadurch, daß die Spannelemente als Spannhebel ausgebildet sind.

### Kurzbeschreibung der Zeichnung

Ein Ausführungsbeispiel der Erfindung wird im Folgenden unter Bezugnahme auf die Zeichnung erläutert, in der darstellen:

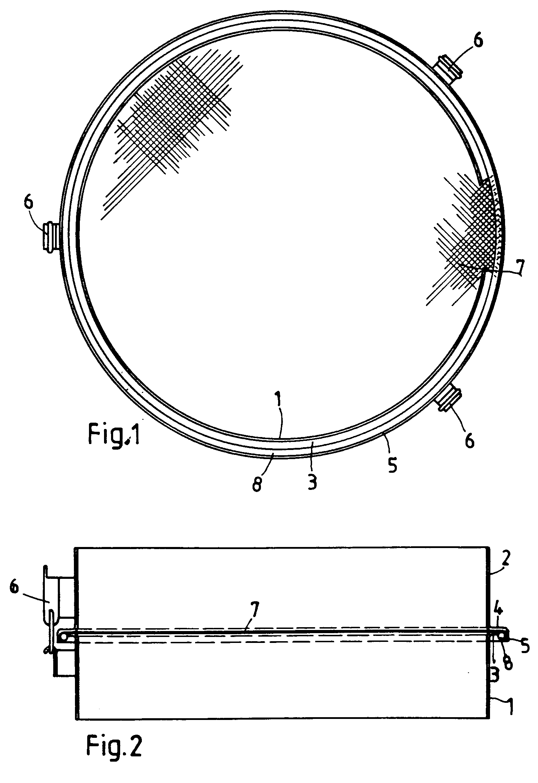

Fig. 1 eine Unteransicht und
Fig. 2 einen Schnitt durch das Sieb.

### Ausführungsbeispiel

Ein erster Ringmantel 1 und ein zweiter Rignmantel 2 haben jeweils gleichen Innendurchmesser. Der erste Ringmantel 1 endet in einen Stirnflansch 3 mit viertelkreisförmigem Querschnitt, dessen Rand eine ebene Stirnfläche begrenzt.

Der zweite Ringmantel 2 hat eine rechtwinklig abgebogene Ringstufe 4, die den Stirnflansch 3 gegenübersteht. An die Ringstufe 4 schließt sich ein axial ausgerichteter Steg 5 an, dessen Innendurchmesser größer als der Außendurchmesser des Außenrandes des Ringflansches 3, so daß zwischen dem Außenrand des Ringflansches 3 und dem axialen Steg 5 ein Spalt frei bleibt.

An den Ringmanteln 1 und 2 sind Spannelemente 6, vorzugsweise in Form von Spannhebeln angesetzt, die ein axiales Zusammenspannen der Ringmäntel ermöglichen.

Ein ebenes Drahtgeflecht 7 in Form einer Kreisscheibe ist mit dem Außenrand auf einen Urahtring 8 aufgelegt und durch eine Schweißverbindung stoftschlüssig mit demselben verbunden.

Alle Teile des Siebes bestehen aus Edelstahl oder einem anderen Werkstoff, der nach lebensmittelrechtlichen Bestimmungen zugelassen ist und die Hygienevorschritten erfüllt.

Zum Zusammenbau des Siebes wird das Drahtgeflecht 7 auf den Stirnflansch 3 des ersten Ringmantels 1 aufgesetzt, wobei der Drahtring 8 den Rand des Stirnflansches 3 übergreift. Das Drahgeflecht 7 wird hierbei in keiner Weise durch den Stirnflansch 3 beansprucht. Sodann wird der zweite Ringmantel 2 darübergestellt. Die Ringstufe 4 liegt auf dem Rand des Drahtgeflechts 7 auf. Der axiale Rand 5 übergreift ebanfalls ohne Beeinträchtigung des Drahtgeflechts 7 den Drahtring 8. Somit werden die beiden Ringmäntel und das Drahtgeflecht genau ineinander zentriert. Schließlich werden die Spannelemente 6 angezogen. Damit ist das Drahtgeflecht sicher zwischen dem Stirnrand 3 und der Ringstufe 4 fixiert. Der Drahtring 8 zentriert das Drahtgeflecht genau. Die trichterartige Wölbung des Strinflansches 3 schließt jede Verletzung des Drahgeflechts aus. Damit wird eine lange Gebrauchsdauer des Drahtgeflechts sichergestellt.

Nach jedem Gebrauch des Siebes werden die Teile auseinandergenommen, so daß eine Reinigung möglich ist. Die Reinigung und das Zusammensetzen der Teile sind sehr schonend. Das Drahtgeflecht kann jederzeit durch ein Ersatzgeflecht ersetzt werden, wenn es durch den bestimmungsmäßigen Gebrauch abgenutzt oder beschädigt ist. Das Drahtgeflecht kann jederzeit gegen ein Drahtgeflecht anderer Siebmaschenweite ausgetauscht werden.

Das Sieb eignet sich besonders für die Bearbeitung von Farcen, Soßen und für andere Passierarbeiten. Das Sieb ist infolge des austauschbaren Drahtgeflechts sehr wirtschaftlich. Denn die Ringmäntel mit hoher Haltbarkeit können praktisch unbegrenzt benutzt werden. Es erfüllt in hervorragender Weise alle hygienischen Anforderungen.

## Patentansprüche

1. Sieb, umfassend ein feines, alt einem Drahtring (7) fest verbundenes Drahtgeflecht (3) und zwei durch Spannelemente (6) lösbar miteinander verbundene, das Drahtgeflecht und den Drahtring festspannende Ringmäntel (1, 2), dadurch gekennzeichnet, daß das Drahtgeflecht (7) eben und der Drahtring (8) auf die Fläche des Drahtgeflechts (7) aufgesetzt ist, daß der erste Ringmantel (1) in einen gerundeten Stirnflansch (3) endet, daß der Drahtring (8) die Außenkante des Stirnflansches (3) übergreift und daß der zweite Ringmantel (2) mit einem in axialer Richtung ausgerichteten Steg (5) einer radialen Ringstufe (4) den Stirnflansch (3) und den Drahtring (8) übergreift.

2. Sieb nach Anspruch 1, dadurch gekennzeichnet, daß der Stirnflansch (3) einen viertelkreisförmigen Querschnitt hat.

3. Sieb nach Anspruch 1 oder 2, dadurch gekennzeichnet, daß die Ringstufe (4) rechtwinklig von den zweiten Ringmantel (2) abgesetzt ist und dem Strinflansch (3) stumpf gegenübersteht.

4. Sieb nach einem der Ansprüche 1 bis 3, dadurch gekennzeichnet, daß der Drahtring (8) durch eine Schweißverbindung mit dem Drahtgeflecht (7) verbunden ist.

5. Sieb nach einen der Ansprüche 1 bis 4, dadurch gekennzeichnet, daß die Spannelemente (6) als Spannhebel ausgebildet sind.

## Claims

1. A sieve comprising a fine wire mesh (3) securely connected to a wire ring (7) and two annular casings (1, 2) detachably connected to one another by means of clamping elements (6) and securely clamping the wire mesh and the wire ring, characterized in that the wire mesh (7) is plane and the wire ring (8) is placed on the face of the wire mesh (7), in that the first annular casing (1) terminates in a rounded end flange (3), in that the wire ring (8) reaches over the outer edge of the end flange 83) and in that the second annular casing (2) has a rim (5), aligned in the axial direction, of a radial annular step (4) which reaches over the end flange (3) and the wire ring (8).

2. A sieve according to claim 1, characterized in that the end flange (3) has a cross section in the shape of a quarter circle.

3. A sieve according to claim 1 or 2, characterized in that the annular step (4) is offset at a right angle from the second annular casing (2) and butts onto the front flange (3).

4. A sieve according to one of claims 1 to 3, characterized in that the wire ring (8) is connected to the wire mesh (7) by means of a welded connection.

5. A sieve according to one of claims 1 to 4, characterized in that the clamping elements (6) are constructed as clamping levers.

## Revendications

1. Tamis, comprenant un treillis (7) en fil métallique fixé à un anneau (8) de fil et deux enveloppes (1, 2) annulaires reliées entre elles de manière mobile par des éléments de tension (6) et tendant le treillis en fil métallique et l'anneau de fil caractérisé en ce que le treillis (7) en fil métallique soit placé à plat et l'anneau de fil est placé sur la surface du treillis (7) en fil métallique, en ce que la première enveloppe (1) annulaire se termine en un collet (3) frontal arrondi, en ce que l'anneau (8) de fil recouvre le bord extérieur du collet (3) frontal et en ce que la deuxième enveloppe (2) annulaire recouvre le collet (3) frontal et l'anneau (8) de fil avec un profilé (5) orienté dans le sens radial d'un gradin (4) annulaire radial.

2. Tamis selon la revendication 1, caractérisé en ce que le collet (3) frontal a une section en forme de quart de cercle.

3. Tamis selon la revendication 1 ou 2, caractérisé en ce que le gradin (4) annulaire est décalé perpendiculairement par rapport à la deuxième enveloppe (2) annulaire et est bord à bord avec le collet (3) frontal.

4. Tamis selon une des revendications 1 à 3, caractérisé en ce que l'anneau (8) de fil est reliée au treillis (7) en fil métallique par une soudure.

5. Tamis selon une des revendications 1 à 4, caractérisé en ce que les éléments (6) de tension sont conformés comme des leviers de tension.
